# FASCICULE DE BREVET EUROPEEN

(11) **EP 1 380 499 B1**
(45) Date de publication et mention de la délivrance du brevet: **17.05.2006**
(21) Numéro de dépôt: 03291579.5
(22) Date de dépôt: 27.06.2003
(51) Int. Cl.: B62M 3/08

(54) **Pédale de cycle à positionnement axial réglable**
Fahrradpedal mit einstellbarer Axiallage
Bicycle pedal with adjustable axial position

(30) Priorité: 08.07.2002 FR 0208523
(43) Date de publication de la demande: 14.01.2004
(73) Titulaire: Look Cycle International, 58000 Nevers (FR)
(72) Inventeur: Reboullet, Olivier, 26270 Loriol (FR)
(74) Mandataire: Boutin, Antoine

(56) Documents cités:
- EP-A- 1 170 203
- FR-A- 2 793 763

## Description

L'invention concerne les pédales automatiques à positionnement réglable de la pédale sur l'axe de pédale, et plus particulièrement les pédales de route, mais aussi les pédales tout terrain.

Une pédale de ce genre comporte un corps de pédale portant des organes d'enclenchement d'un élément d'accrochage fixé sous une chaussure de cycliste, et un axe de pédale destiné à être fixé à une manivelle de pédalier.

On connaît des pédales automatiques de ce genre permettant le réglage du positionnement de la surface d'appui du pied lors du pédalage. Un premier réglage permet de déplacer transversalement suivant l'axe de pédale la surface d'appui du pied sur la pédale par rapport à la manivelle de pédalier pour rapprocher le pied le plus possible de celle-ci sans la toucher ou pour l'éloigner de celle-ci. Un deuxième réglage peut être prévu afin de permettre de modifier l'angle d'inclinaison du corps de pédale par rapport à l'axe de pédale.

Une pédale automatique permettant ces réglages est connue de la demande de brevet FR 99 06274 de la demanderesse. Le corps de pédale porte une douille formant siège pour une cartouche métallique dans lequel l'axe de pédale est logé. Pour le réglage de la position transversale de l'axe, une nervure circulaire sur la cartouche est susceptible de coopérer avec une parmi plusieurs rainures circulaires aménagées dans la douille. Ces rainures circulaires sont disposées les unes après les autres de manière à définir des positions transversales successives de l'axe par rapport au corps de pédale. Cependant, les moyens de réglage comportent un grand nombre de pièces complexes dont certaines sont relativement fragiles.

Pour pallier ces inconvénients, la demanderesse a dans son brevet FR 2811287 proposé des moyens de réglage simplifiés. La cartouche contenant l'axe de pédale est pourvu d'un filetage apte à coopérer avec un taraudage dans le logement globalement cylindrique de la cartouche. La position transversale de la cartouche, et par conséquent du corps de pédale, par rapport à la manivelle de pédalier peut ainsi être réglée en vissant ou dévissant la cartouche dans son logement.

Ce logement est par ailleurs effectué dans un support élastiquement déformable qui est fendu à l'endroit du logement et qui peut être fixé à l'aide de vis de fixation contre la face inférieure du corps de pédale proprement dit de manière à maintenir la cartouche dans une position transversale choisie en serrant la paroi interne du logement autour de la cartouche par déformation élastique.

Même si cette pédale automatique de cycle d'après le préambule de la revendication 1 donne généralement satisfaction, elle présente néanmoins quelques inconvénients. Plus précisément, on a pu constater que dans la pratique, cette construction n'est pas tout à fait fiable en ce qui concerne le maintien en place de la cartouche dans son logement. Cela est dû au fait que le support comportant le logement de la cartouche est en matière plastique déformable, ce qui peut entraîner un certain fluage de cette matière sous la contrainte mécanique due au serrage des vis de fixation et, par conséquent, le dérèglement de la fonction de maintien.

L'invention a pour but de remédier à ces inconvénients en proposant une pédale pourvue de moyens de réglage de la position transversale de la cartouche qui soient absolument fiables du point de vue du maintien en place de celle-ci dans la position choisie et qui permet en plus l'utilisation d'une cartouche en matière plastique. Les moyens de maintien selon l'invention sont particulièrement simples à mettre en oeuvre et permettent en même temps le réglage aisé et simple de la position transversale de la cartouche.

L'invention a pour objet une pédale automatique de cycle comportant un corps de pédale portant des organes d'enclenchement d'un élément d'accrochage fixé sous une chaussure de cycliste et une cartouche cylindrique contenant un axe de pédale apte à être fixé à une manivelle de pédalier, ladite cartouche étant reçue dans un logement cylindrique transversal de la pédale, ce logement cylindrique étant pourvu d'un taraudage coopérant avec un filetage sur la cartouche pour permettre le réglage en continu de la position transversale de celle-ci, et des moyens de maintien de la cartouche dans une position transversale choisie, lesdits moyens de maintien comportant un élément de blocage en rotation de la cartouche caractérisée par le fait que ledit élément de blocage en rotation est axialement déplaçable dans ledit logement et apte à être relié à ladite cartouche par des premiers moyens de crabotage prévus sur une extrémité de celle-ci et des deuxièmes moyens de crabotage prévus sur ledit élément de blocage, et des moyens de serrage apte à serrer l'élément de blocage en rotation contre ladite cartouche pour mettre lesdits premiers et deuxièmes moyens de crabotage en prise les uns avec les autres.

Selon d'autres caractéristiques de l'invention :
- ledit élément de blocage en rotation de la cartouche comporte un organe de blocage en rotation par rapport audit logement ;
- ledit organe de blocage en rotation comporte au moins un ergot radial prévu sur la périphérie de l'élément de blocage en rotation et s'étendant dans une rainure axiale prévue sur la paroi interne dudit logement ;
- ledit organe de blocage en rotation est constitué par la forme non circulaire de la périphérie dudit élément de blocage en rotation qui est complémentaire de la forme non circulaire d'une zone d'extrémité dudit logement ;
- lesdits moyens de serrage comportent un élément de vissage comprenant un premier filet apte à coopérer avec un deuxième filet à l'intérieur du logement pour serrer ledit élément de blocage en rotation contre ladite cartouche ;
- ledit premier filet est constitué par le taraudage d'un écrou formant ledit élément de vissage, et ledit deuxième filet est constitué par un filet externe sur une tige centrale à l'extrémité de la cartouche s'étendant par un trou central dudit élément de blocage en rotation ;
- ledit premier filet est constitué par un filet externe sur un élément de vissage cylindrique, et le deuxième filet est constitué par un taraudage dans une zone d'extrémité dudit logement ;
- lesdits premiers et deuxièmes moyens de crabotage présentent des surfaces complémentaires coniques, et ledit élément de blocage en rotation est formé par une bague élastique fendue, de sorte que la périphérie de ladite bague soit sollicitée vers la paroi interne dudit logement lorsque ledit élément de blocage en rotation est serré contre ladite cartouche ;
- lesdits premiers et deuxièmes moyens de crabotage comportent des nervures et rainures complémentaires ;
- lesdites nervures et rainures présentent une section arrondie;
- l'élément de vissage ainsi que l'élément de blocage en rotation comportent des crans respectifs prévus sur ses faces en regard de manière à empêcher le dévissage spontané de l'élément de vissage lors de l'utilisation de la pédale.

D'autres caractéristiques et avantages de l'invention ressortiront de la description ci-dessous d'un mode de réalisation de l'invention, cette description étant faite à titre d'exemple non limitatif en référence aux dessins annexés sur lesquels :
- La figure 1 est une vue éclatée en perspective d'une cartouche pourvue des moyens de maintien en place selon l'invention ;
- La figure 2 correspond à la figure 1, tournée dans l'autre sens ;
- La figure 3 est une vue en perspective, partiellement éclatée, d'une pédale selon l'invention ;
- La figure 4 est une vue en coupe transversale de la pédale selon l'invention montrant le corps de pédale à une distance minimale par rapport à la manivelle de pédalier ;
- La figure 5 est une vue en coupe transversale de la pédale selon l'invention montrant le corps de pédale à une distance maximale par rapport à la manivelle de pédalier ;
- La figure 6 est une vue latérale d'une pédale selon l'invention.

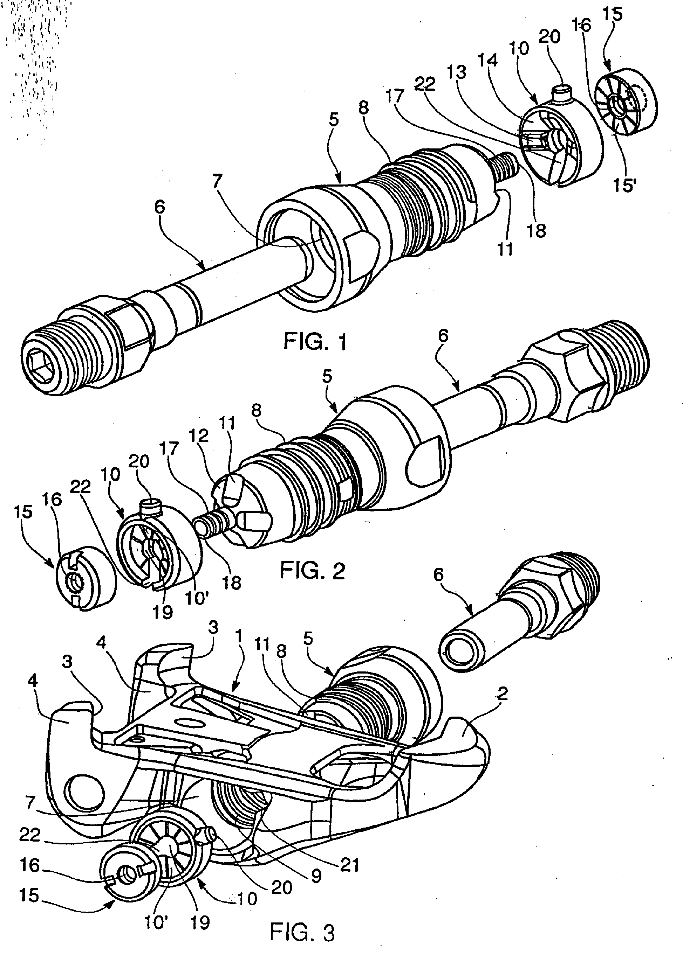

En référence à la figure 3, la pédale comporte un corps de pédale 1 portant des organes d'enclenchement d'un élément d'accrochage (non représenté) fixé sous une chaussure de cycliste (non représentée). Ces organes d'enclenchement comprennent de manière connue un crochet avant fixe 2 et deux crochets arrières mobiles 3 formés sur un levier respectif 4 sollicité vers la position d'enclenchement par des éléments élastiques constitués par des ressorts de torsion (non représentés).

Le corps de pédale porte en outre un élément allongé sous forme d'une cartouche 5 dans laquelle un axe de pédale 6 est monté rotatif à l'aide d'un roulement (non représenté).

Le corps de pédale 1 est pourvu d'un trou transversal traversant de forme cylindrique formant logement pour la cartouche 5.

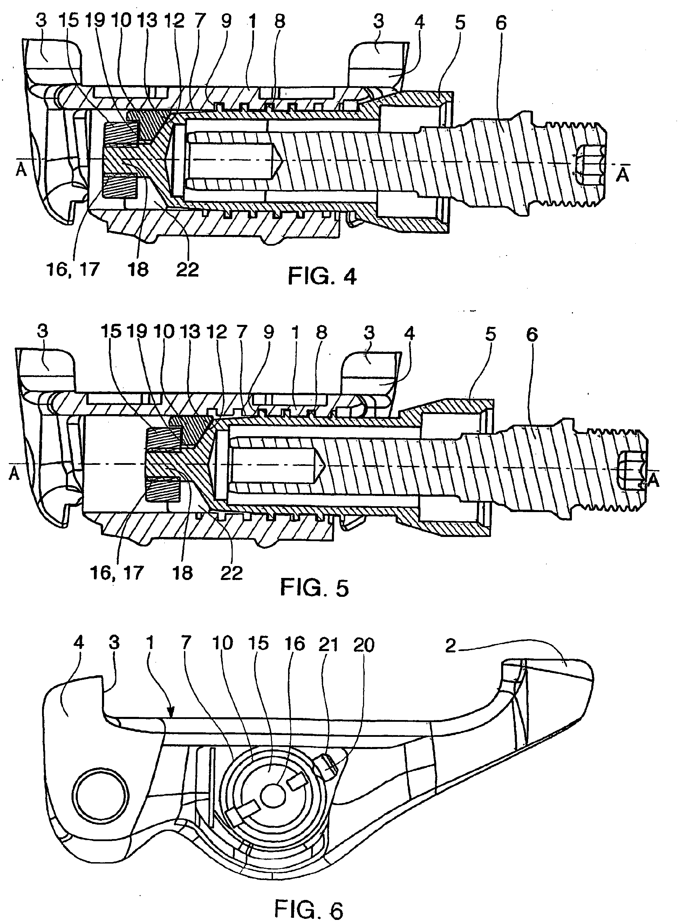

Pour le réglage de la position transversale du corps de pédale 1, et par conséquent de la surface d'appui du pied, le long de l'axe de pédale A-A (voir figure 4), la cartouche 5 est pourvue d'un filetage 8 apte à coopérer avec un taraudage 9 prévu sur la paroi interne du logement 7 dans le corps de pédale 1.

Grâce à cette disposition, il est possible d'effectuer un réglage en continu de cette position transversale de la cartouche et, par conséquent, du corps de pédale. Le pas de vis est tel qu'il donne une plage de réglage correspondant avantageusement à environ 10 mm, permettant un positionnement ajustable de 50 à 60 mm depuis l'axe médian longitudinal du corps de pédale 1 jusqu'à la face externe de la manivelle.

La cartouche 5 peut ainsi être déplacée axialement entre la position à distance minimale par rapport au pédalier illustrée à la figure 4 jusqu'à la position à distance maximale illustrée à la figure 5.

Suite à ce réglage, il est important que la cartouche soit fermement maintenue en place dans le logement et à cet effet les moyens de maintien comportent selon l'invention un élément de blocage en rotation 10 de la cartouche dans le logement 7. Cet élément de blocage en rotation comporte un organe de blocage en rotation qui sera décrit en détail ultérieurement.

Dans l'exemple illustré, l'élément de blocage en rotation a la forme d'une bague 11 axialement déplaçable dans le logement 7 et apte à être reliée à la cartouche 5 par des moyens de crabotage. Ces moyens de crabotage comportent des premiers moyens de crabotage 11 sous forme de nervures prévues sur une face conique convexe 12 à l'extrémité de la cartouche 5 et des deuxièmes moyens de crabotage 13 sous forme de rainures prévues sur une face conique concave 14 dans la bague 10.

Les faces coniques 12, 14 sont complémentaires et les rainures 11 et nervures 13 sont également complémentaires et présentent de préférence une section arrondie pour faciliter l'amorçage du réglage.

Dans l'exemple illustré, les rainures 11 et les nervures 13 sont au nombre de quatre régulièrement espacées les unes des autres. Bien entendu, elles pourraient être au nombre de par exemple six ou huit, ce qui permettrait un réglage encore plus fin.

La pédale est également pourvue de moyens de serrage apte à serrer la bague 10 contre la cartouche 5 pour mettre les nervures 13 et les rainures 11 en prise les unes avec les autres.

Selon le mode de réalisation illustré sur les figures, ces moyens de serrage comporte un élément de vissage sous forme d'un écrou 15 dont le taraudage 16 constitue un premier filet apte à coopérer avec un deuxième filet sous forme d'un filetage 17 sur une tige centrale 18 à l'extrémité de la cartouche 5. Cette tige centrale 18 traverse un trou central 19 de la bague 10 pour coopérer avec l'écrou 15 de manière à serrer la bague contre l'extrémité de la cartouche pour mettre en prise les moyens de crabotage.

Selon une variante non illustrée sur les figures, un premier filet est constitué par un filet externe sur un élément de vissage cylindrique, alors qu'un deuxième filet est constitué par un taraudage dans une zone d'extrémité du logement 7. Cela apporte l'avantage que l'élément de vissage constitue en même temps un bouchon et il devient pratiquement imperdable puisqu'il ne sera jamais entièrement dévissé du logement 7.

Comme déjà mentionné, la bague 10 comporte un organe de blocage en rotation par rapport au logement 7. Dans le mode de réalisation illustré sur les figures, cet organe de blocage en rotation comporte au moins un ergot radial 20 prévu sur sa périphérie et s'étendant dans une rainure axiale 21 prévue sur la paroi interne du logement 7.

Selon une variante non illustrée sur les figures, l'organe de blocage en rotation est tout simplement constitué par une forme non circulaire de la périphérie de l'élément de blocage en rotation qui est complémentaire d'une forme non circulaire d'une zone d'extrémité du logement 7. Cette forme non circulaire peut être une forme ovale, hexagonale ou autre.

Dans le mode de réalisation illustré sur les figures, la bague 10 est une bague fendue présentant une fente 22 s'étendant du trou central 19 jusqu'à la périphérie de la bague. Dans ce cas, la bague est effectuée en une matière plastique légèrement flexible de sorte que lorsqu'elle est serrée contre la cartouche 5, les faces coniques 12, 14 de ces deux éléments produiront un effet de coin qui repoussera la périphérie de la bague contre la paroi interne du logement 5 de manière à rattraper tout jeu entre les surfaces en regard et en même temps fermement fixer la bague à l'intérieur du logement.

Par ailleurs, pour améliorer la retenue de l'élément de vissage contre l'élément de blocage en rotation, et plus particulièrement de l'écrou 15 contre la bague 10, ces deux éléments sont sur ses faces en regard avantageusement pourvus de crans respectifs 15', 10' qui lors du serrage de l'écrou entre en contact les uns avec les autres pour empêcher le dévissage spontané de l'écrou 15 lors de l'utilisation de la pédale. Bien entendu, ces crans 10', 15' peuvent également être prévus sur un élément de vissage cylindrique tel que mentionné ci-dessus.

Grâce à l'invention est ainsi obtenue une pédale permettant le réglage aisé de la position latérale du corps de pédale, et cela à l'aide de moyens extrêmement simples, fiables et peu coûteux. Par ailleurs, l'invention permet en plus l'utilisation d'une cartouche en matière plastique.

## Revendications

1. Pédale automatique de cycle comportant un corps de pédale (1) portant des organes d'enclenchement (2, 3) d'un élément d'accrochage fixé sous une chaussure de cycliste et une cartouche cylindrique (5) contenant un axe de pédale (6) apte à être fixé à une manivelle de pédalier, ladite cartouche (5) étant reçue dans un logement cylindrique transversal (7) de la pédale, ce logement cylindrique étant pourvu d'un taraudage (9) coopérant avec un filetage sur la cartouche (5) pour permettre le réglage en continu de la position transversale de celle-ci, et des moyens de maintien (10 à 15) de la cartouche (5) dans une position transversale choisie, lesdits moyens de maintien (10 à 15) comportant un élément de blocage en rotation (10) de la cartouche (5), **caractérisée par le fait que** ledit élément de blocage en rotation est axialement déplaçable dans ledit logement (7) et apte à être relié à ladite cartouche (5) par des premiers moyens de crabotage (11) prévus sur une extrémité de celle-ci et des deuxièmes moyens de crabotage (13) prévus sur ledit élément de blocage (10), et des moyens de serrage (15, 17, 18) apte à serrer l'élément de blocage en rotation contre ladite cartouche (5) pour mettre lesdits premiers et deuxièmes moyens de crabotage (11, 13) en prise les uns avec les autres.

2. Pédale selon la revendication 1, **caractérisée par le fait que** ledit élément de blocage en rotation (10) de la cartouche (5) comporte un organe de blocage en rotation (20) par rapport audit logement (7).

3. Pédale selon la revendication 2, **caractérisée par le fait que** ledit organe de blocage en rotation (20) comporte au moins un ergot radial prévu sur la périphérie de l'élément de blocage en rotation (10) et s'étendant dans une rainure axiale (21) prévue sur la paroi interne dudit logement (7).

4. Pédale selon la revendication 2, **caractérisée par le fait que** ledit organe de blocage en rotation est constitué par la forme non circulaire de la périphérie dudit élément de blocage en rotation (10) qui est complémentaire de la forme non circulaire d'une zone d'extrémité dudit logement (7).

5. Pédale selon l'une des revendications précédentes, **caractérisée par le fait que** lesdits moyens de serrage comportent un élément de vissage (15) comprenant un premier filet (16) apte à coopérer avec un deuxième filet (17) à l'intérieur du logement (7) pour serrer ledit élément de blocage (10) en rotation contre ladite cartouche (5).

6. Pédale selon la revendication 5, **caractérisée par le fait que** ledit premier filet (16) est constitué par le taraudage d'un écrou (15) formant ledit élément de vissage, et que ledit deuxième filet (17) est constitué par un filet externe sur une tige centrale (18) à l'extrémité de la cartouche (5) s'étendant par un trou central (19) dudit élément de blocage en rotation (10).

7. Pédale selon la revendication 5, **caractérisée par le fait que** ledit premier filet est constitué par un filet externe sur un élément de vissage cylindrique, et que le deuxième filet est constitué par un taraudage dans une zone d'extrémité dudit logement (7).

8. Pédale selon l'une quelconque des revendications précédentes, **caractérisée par le fait que** lesdits premiers et deuxièmes moyens de crabotage (11, 13) présentent des surfaces complémentaires coniques (12, 14), et que ledit élément de blocage en rotation (10) est formé par une bague élastique fendue, de sorte que la périphérie de ladite bague soit sollicitée vers la paroi interne dudit logement (7) lorsque ledit élément de blocage en rotation (10) est serré contre ladite cartouche (5).

9. Pédale selon l'une quelconque des revendications précédentes, **caractérisée par le fait que** lesdits premiers et deuxièmes moyens de crabotage (11, 13) comportent des nervures (13) et rainures (11) complémentaires.

10. Pédale selon la revendication 9, **caractérisée par le fait que** lesdites nervures (13) et rainures (11) présentent une section arrondie.

11. Pédale selon l'une quelconque des revendications 6 à 10, **caractérisé par le fait que** l'élément de vissage (15) ainsi que l'élément de blocage en rotation (10) comportent des crans respectifs (15', 10') prévus sur ses faces en regard de manière à empêcher le dévissage spontané de l'élément de vissage lors de l'utilisation de la pédale.

## Claims

1. Automatic bicycle pedal comprising a pedal body (1) carrying members (2, 3) for engaging an attachment element fixed below a cyclist's shoe and a cylindrical cartridge (5) containing a pedal shaft (6) capable of being fixed to a pedal crank, said cartridge (5) being received in a transverse cylindrical recess (7) in the pedal, this cylindrical recess being provided with an internal thread (9) cooperating with an external thread on the cartridge (5) to allow continuous adjustment of the transverse position of said cartridge, and means (10 to 15) for holding the cartridge (5) in a selected transverse position, said holding means (10 to 15) comprising an element (10) for locking the rotation of the cartridge (5), **characterised by** the fact that said rotational locking element is axially displaceable in said recess (7) and is capable of being connected to said cartridge (5) by first clutch coupling means (11) provided on an end of said cartridge and second clutch coupling means (13) provided on said locking element (10), and gripping means (15, 17, 18) capable of gripping the rotational locking element against said cartridge (5) for bringing said first and second clutch coupling means (11, 13) into engagement with one another.

2. Pedal according to claim 1, **characterised by** the fact that said element (10) for locking the rotation of the cartridge (5) comprises a member (20) for rotational locking relative to said recess (7).

3. Pedal according to claim 2, **characterised by** the fact that said rotational locking member (20) comprises at least one radial lug provided on the periphery of the rotational locking element (10) and extending into an axial groove (21) provided on the internal wall of said recess (7).

4. Pedal according to claim 2, **characterised by** the fact that said rotational locking member consists of the non-circular shape of the periphery of said rotational locking element (10), which is complementary to the non-circular shape of an end zone of said recess (7).

5. Pedal according to any one of the preceding claims, **characterised by** the fact that said gripping means comprise a screwing element (15) comprising a first thread (16) capable of cooperating with a second thread (17) inside the recess (7) for gripping said rotational locking element (10) against said cartridge (5).

6. Pedal according to claim 5, **characterised by** the fact that said first thread (16) consists of the internal thread of a nut (15) forming said screwing element, and that said second thread (17) consists of an external thread on a central rod (18) at the end of the cartridge (5) extending through a central hole (19) in said rotational locking element (10).

7. Pedal according to claim 5, **characterised by** the fact that said first thread consists of an external thread on a cylindrical screwing element, and that the second thread consists of an internal thread in an end zone of said recess (7).

8. Pedal according to any one of the preceding claims, **characterised by** the fact that said first and second clutch coupling means (11, 13) have complementary conical surfaces (12, 14), and that said rotational locking element (10) is formed by a slotted resilient ring in such a way that the periphery of said ring is urged toward the internal wall of said recess (7) when said rotational locking element (10) is gripped against said cartridge (5).

9. Pedal according to any one of the preceding claims, **characterised by** the fact that said first and second clutch coupling means (11, 13) comprise complementary ribs (13) and grooves (11).

10. Pedal according to claim 9, **characterised by** the fact that said ribs (13) and grooves (11) have a rounded section.

11. Pedal according to any one of claims 6 to 10, **characterised by** the fact that the screwing element (15) and the rotational locking element (10) comprise respective notches (15', 10') provided on their opposing faces so as to prevent spontaneous unscrewing of the screwing element when the pedal is in use.

## Patentansprüche

1. Automatisches Fahrradpedal mit einem Pedalkörper (1), der Einschnapporgane (2, 3) für ein Befestigungselement aufweist, das unter einem Fahrradschuh befestigt ist, und mit einer zylinderförmigen Hülse (5), die eine Pedalachse (6) enthält, die dazu geeignet ist, an einer Tretkurbel befestigt zu werden, wobei diese Hülse (5) in einer quer angeordneten, zylinderförmigen Aufnahme (7) des Pedals sitzt, wobei diese zylinderförmige Aufnahme mit einem Innengewinde (9) versehen ist, das mit einem Außengewinde an der Hülse (5) zusammenwirkt, um das stufenlose Verstellen von deren Querposition zu ermöglichen, sowie mit Haltemitteln (10 bis 15), die die Hülse (5) in einer gewählten Querposition halten, wobei diese Haltemittel (10 bis 15) ein Drehblockierelement (10) für die Hülse (5) enthalten,
**dadurch gekennzeichnet,**
**dass** dieses Drehblockierelement (10) in der Aufnahme (7) axial verschiebbar ist und mit der Hülse (5) durch erste Formschlusskupplungsmittel (11), die an einem von deren Enden vorgesehen sind, und durch zweite Formschlusskupplungsmittel (13), die an diesem Blockierelement (10) vorgesehen sind, sowie durch Klemmmittel (15, 17, 18), die geeignet sind, das Drehblockierelement gegen die Hülse (5) zu klemmen, so dass diese ersten und zweiten Formschlusskupplungsmittel (11, 13) miteinander in Eingriff kommen, verbunden werden kann.

2. Fahrradpedal nach Anspruch 1,
**dadurch gekennzeichnet,**
**dass** dieses Drehblockierelement (10) der Hülse (5) ein Drehblockierorgan (10) zum Blockieren der Drehbewegung gegenüber der Aufnahme (7) aufweist.

3. Fahrradpedal nach Anspruch 2,
**dadurch gekennzeichnet,**
**dass** dieses Drehblockierorgan (10) mindestens einen radial an der Außenumfangslinie des Drehblockierelements (10) vorgesehenen Zapfen enthält, der sich in eine axial verlaufende Nut (21) hinein erstreckt, welche an der Innenwand der Aufnahme (7) vorgesehen ist.

4. Fahrradpedal nach Anspruch 2,
**dadurch gekennzeichnet,**
**dass** das Drehblockierorgan (10) durch die nicht kreisförmige Form der Außenumfangslinie dieses Drehblockierorgans (10) gebildet wird, die komplementär zu der nicht kreisförmigen Form eines Endbereichs der Aufnahme (7) ist.

5. Fahrradpedal nach einem der vorherigen Ansprüche,
**dadurch gekennzeichnet,**
**dass** diese Klemmmittel ein Schraubelement (15) mit einem ersten Gewindegang (16) umfassen, welcher geeignet ist, mit einem zweiten Gewindegang (17) in der Aufnahme (7) zusammenzuwirken, um dieses Drehblockierorgan (10) an der Hülse (5) festzuklemmen.

6. Fahrradpedal nach Anspruch 5,
**dadurch gekennzeichnet,**
**dass** der erste Gewindegang (16) aus dem Innengewinde einer Mutter (15) besteht, die dieses Schraubelement bildet, und dass der zweite Gewindegang (17) von einem Außengewinde an einer zentral verlaufenden, sich durch ein zentrales Loch (19) dieses Drehblockierorgans (10) erstreckenden Stange (18) am Ende der Hülse (5) gebildet wird.

7. Fahrradpedal nach Anspruch 5,
**dadurch gekennzeichnet,**
**dass** der erste Gewindegang von einem Außengewinde an einem zylindrischen Schraubelement gebildet wird, und dass der zweite Gewindegang von einem Innengewinde in einem Endbereich der Aufnahme (7) gebildet wird.

8. Fahrradpedal nach einem der vorherigen Ansprüche,
**dadurch gekennzeichnet,**
**dass** die ersten und zweiten Formschlusskupplungsmittel (11, 13) komplementäre konische Oberflächen (12, 14) aufweisen, und dass das Drehblockierorgan (10) von einem geschlitzten, elastischen Ring gebildet wird, so dass die Außenumfangslinie dieses Rings zur Innenwand der Aufnahme (7) hin belastet wird, wenn dieses Drehblockierorgan (10) gegen die Hülse (5) geklemmt wird.

9. Fahrradpedal nach einem der vorherigen Ansprüche,
**dadurch gekennzeichnet,**
**dass** die ersten und zweiten Formschlusskupplungsmittel (11, 13) aus komplementären Rippen (13) und Nuten (11) bestehen.

10. Fahrradpedal nach Anspruch 9,
**dadurch gekennzeichnet,**
**dass** diese Rippen (13) und Nuten (11) einen abgerundeten Querschnitt aufweisen.

11. Fahrradpedal nach einem der Ansprüche 6 bis 10,
**dadurch gekennzeichnet,**
**dass** das Schraubelement (15) und das Drehblockierorgan (10) an den einander gegenüber liegenden Seiten jeweils Einkerbungen (15' bzw. 10') aufweisen, so dass ein ungewolltes Lockern des Schraubelements bei der Benutzung des Pedals verhindert wird.
